Europäisches Patentamt

European Patent Office

Office européen des brevets

(11) Veröffentlichungsnummer: **0 429 935 A2**

(12) **EUROPÄISCHE PATENTANMELDUNG**

(21) Anmeldenummer: 90121602.8

(22) Anmeldetag: 12.11.90

(51) Int. Cl.5: **B63H 9/06**, B05D 3/06

(30) Priorität: 20.11.89 DE 8913676 U

(43) Veröffentlichungstag der Anmeldung:
05.06.91 Patentblatt 91/23

(84) Benannte Vertragsstaaten:
AT BE CH DE DK ES FR GB IT LI LU NL
Patentblatt /

(71) Anmelder: HOECHST AKTIENGESELLSCHAFT
Postfach 80 03 20
W-6230 Frankfurt am Main 80(DE)

(72) Erfinder: Beer, Ekkehard
Liebigstrasse 4
W-6208 Bad Schwalbach(DE)
Erfinder: Hessberger, Harald, Dr.
In den Dörrwiesen 6
W-6270 Idstein(DE)

(54) Farbiges transparentes Windsegel aus Polyesterfolie.

(57) Die Erfindung betrifft ein Windsegel mit einer
Folie aus Kunststoff. Die Folie ist eine transparente,
biaxial streckorientierte und anschließend hitzefixierte Polyesterfolie, die wenigstens einseitig einen wasserfesten Überzug enthaltend ein Bindemittel und
gegebenenfalls einen Farbstoff trägt. Die Erfindung
betrifft auch ein Verfahren zum Herstellen eines Segels und dessen Verwendung zum Antrieb von Surfbrettern.

EP 0 429 935 A2

# FARBIGES TRANSPARENTES WINDSEGEL AUS POLYESTERFOLIE

Die vorliegende Erfindung betrifft ein Windsegel mit einer Folie aus thermoplastischem Kunststoff.

Windsegel der gattungsgemäßen Art werden üblicherweise für Segelboote verwendet oder in noch größerem Umfang für Surfbretter. Aus der EP-A-0 034 189 und der EP-A-0 227 922 bekannte Segel weisen eine Gewebeschicht auf und eine mit dieser verbundene Schicht aus Kunststoff. Nachteiligerweise behindern diese Segel aber die Sicht ihrer Benutzer, jedenfalls in der dem Segel zugewandten Blickrichtung. Um diesen Nachteil zu beheben, ist man dazu übergegangen, Sichtfenster in die Segel einzubauen, an denen das Gewebe unterbrochen, die Kunststoffschicht aber nicht unterbrochen ist, oder größere Bereiche als Nurfoliensegel (Monofilmsegel) auszuführen. Allerdings stehen insbesondere noch Wünsche der Anwender offen, die gleichzeitig ein besonders ansprechendes farbliches Design der Segel und gute Rundumsicht realisiert sehen möchten.

Aufgabe der Erfindung war es, ein vollständig transparentes, ganzflächig oder partiell eingefärbtes Windsegel zu schaffen.

Gelöst wird diese Aufgabe durch ein Windsegel der eingangs genannten Gattung, dessen Kennzeichenmerkmal darin besteht, daß die Folie eine transparente biaxial streckorientierte und hitzefixierte Folie aus Polyester ist, die wenigstens einseitig einen wasserfesten Überzug enthaltend ein Bindemittel und gegebenenfalls einen Farbstoff trägt. Vorzugsweise trägt die Polyesterfolie beidseitig einen solchen Überzug.

Als Polyester sind Polykondensate aus Terephthalsäure, Isophthalsäure oder 2,6-Naphthalindicarbonsäure mit Glykolen mit 2 bis 10 C-Atomen geeignet. Derartige Polyester sind z. B. Polyethylenterephthalat, Polybutylenterephthalat, Poly-1,4-cyclohexylendimethylenterephthalat, Polyethylen-2,6-naphthalindicarboxylat oder Polyethylen-p-hydroxybenzoat. Die biaxial streckorientierte Folie aus dem Polyester weist eine Dicke im Bereich von 10 bis 300 $\mu$m auf, vorzugsweise von 12 bis 200 $\mu$m. Die Folie wird nach der Streckorientierung zur Verbesserung ihrer Dimensionsstabilität einer Hitzefixierung unterworfen. Ferner kann die hitzefixierte Folie zur Verbesserung ihrer Hafteigenschaften gegenüber dem aufzubringenden Überzug oder zur direkten Bedruckung an ihrer Oberfläche mit einer elektrischen Coronasprühentladung behandelt werden. Dabei wird die Folie zwischen geeigneten Elektroden hindurchgeführt, die an eine Wechselspannung von etwa 10 000 V und 10 000 Hz angeschlossen sind.

Der Überzug oder die Überzüge werden nach einem üblichen Auftragsverfahren aufgebracht. Sie können aufextrudiert, aufgedruckt, aufgesprüht, aufgegossen oder aufgesputtert werden.

Als Bindemittel eignen sich Mischpolymere aus Acrylaten und Methacrylaten, z. B. aus Ethylacrylat und Methylmethacrylat oder Polyvinylacetat oder ähnliche. Die Bindemittel können zur Verbesserung ihrer Dauerbeständigkeit geeignete Mengen an Vernetzungsmittel enthalten. Als Farbstoffe eignen sich solche Farbstoffe, die die Transparenz der Folie möglichst wenig beeinträchtigen. Die Farbstoffe werden mit dem Bindemittel in schmelzflüssiger Form oder in Lösung homogen vermischt, und die Mischung wird dann nach einem der bereits genannten Verfahren auf die Folie aufgebracht.

Die Dicke des Überzugs oder der Überzüge liegt erfindungsgemäß im Bereich von 0,1 bis 5 $\mu$m, vorzugsweise von 0,5 bis 3 $\mu$m.

Überraschenderweise zeigt das erfindungsgemäße Windsegel sehr gute Transparenz und gleichzeitig ausgezeichnete Farbechtheit bei seinem bestimmungsgemäßen Einsatz, insbesondere bei lang andauernder Einwirkung von Sonnenstrahlung.

Die Erfindung wird nachfolgend durch eine beispielhafte Zeichnung näher erläutert.

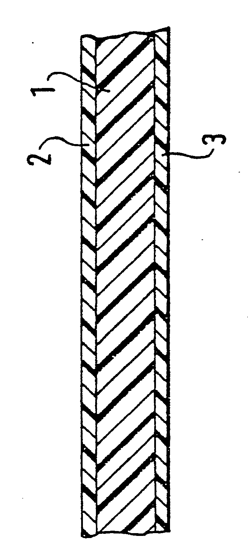

Die einzige Figur zeigt einen senkrechten Schnitt durch ein erfindungsgemäßes Windsegel in seitlicher Ansicht. Auf der Darstellung ist die Polyesterfolie 1 erkennbar, die beidseitig Überzüge 2,3 trägt.

## Ansprüche

1. Windsegel mit einer Folie aus thermoplastischem Kunststoff, dadurch gekennzeichnet, daß die Folie eine transparente, biaxial streckorientierte und hitzefixierte Folie aus Polyester ist, die wenigstens einseitig einen wasserfesten Überzug enthaltend ein Bindemittel und gegebenenfalls einen Farbstoff trägt.

2. Windsegel nach Anspruch 1, dadurch gekennzeichnet, daß die Folie aus Polyester beidseitig einen Überzug trägt.

3. Windsegel nach Anspruch 1 oder 2, dadurch gekennzeichnet, daß der Polyester Polyethylenterephthalat ist.

4. Windsegel nach einem der Ansprüche 1 bis 3, dadurch gekennzeichnet, daß die Folie aus Polyester eine Dicke im Bereich von 10 bis 300 $\mu$m aufweist, vorzugsweise von 12 bis 200 $\mu$m.

5. Windsegel nach einem der Ansprüche 1 bis 4, dadurch gekennzeichnet, daß der Überzug als Bindemittel Mischpolymere aus Acrylaten und Methacrylaten, z. B. aus Ethylacrylat und Methylmethacrylat oder Polyvinylacetat enthält.

6. Windsegel nach einem der Ansprüche 1 bis 5, dadurch gekennzeichnet, daß die Dicke des Überzuges oder der Überzüge im Bereich von 0,1 bis 5 μm, vorzugsweise von 0,5 bis 3 μm, liegt.

7. Verfahren zum Herstellen eines Windsegels nach einem der Ansprüche 1 bis 6, dadurch gekennzeichnet, daß eine biaxial streckorientierte und hitzefixierte Polyesterfolie einer elektrischen Coronabehandlung unterworfen wird und daß auf die behandelte Seite der Folie ein Überzug enthaltend ein Bindemittel und einen Farbstoff aufgetragen wird.

8. Verfahren nach Anspruch 7, dadurch gekennzeichnet, daß der Überzug aufextrudiert, aufgedruckt, aufgesprüht, aufgegossen oder aufgesputtert wird.

9. Verwendung einer biaxial streckorientierten und hitzefixierten Polyesterfolie, die wenigstens einseitig einen Überzug enthaltend ein Bindemittel und einen Farbstoff trägt, als Surfsegel.